# EUROPÄISCHE PATENTANMELDUNG

(11) **EP 4 316 638 A1**
(43) Veröffentlichungstag der Anmeldung: **07.02.2024**
(21) Anmeldenummer: 22020374.9
(22) Anmeldetag: 04.08.2022
(51) Int. Cl.: B01J 4/00, B01J 8/00, B01J 8/06, B01J 15/00

(54) **VERFAHREN UND ANLAGE ZUR DURCHFÜHRUNG EINER GASPHASENREAKTION**

(71) Anmelder: Linde GmbH, 82049 Pullach (DE)
(72) Erfinder: Schödel, Nicole, 82049 Pullach (DE); Mihailowitsch, Dieter, 82049 Pullach (DE); Weikl, Markus, 82049 Pullach (DE); Müller-Thorwart, Ole, 82049 Pullach (DE); Mayerhofer, Mathias, 82049 Pullach (DE); Peschel, Andreas, 82049 Pullach (DE)
(74) Vertreter: Fischer, Werner

(57) **Zusammenfassung**

Ein Verfahren zur Durchführung einer Gasphasenreaktion wird vorgeschlagen, bei dem ein Reaktanden enthaltendes Prozessgas durch einen Reaktor (100, 200) geführt wird, wobei der Reaktor (100, 200) einen Reaktorbehälter (101) mit einem Rohrboden (102) aufweist, der einen Einspeisebereich (103) für das Prozessgas abgrenzt, und ausgehend von welchem sich eine Vielzahl von Reaktionsrohren (104) erstreckt, die auf einer ersten Seite zu dem Einspeisebereich (103) für das Prozessgas geöffnet sind und auf einer zweiten Seite zu einem Entnahmebereich (105) für das Prozessgas geöffnet sind, so dass das Prozessgas durch die Reaktionsrohre (104) strömt, wobei koaxial innerhalb zumindest eines Teils der Reaktionsrohre (104) jeweils ein stabförmiges elektrisches Heizelement (11) angeordnet ist, mittels welchem das durch das jeweilige Reaktionsrohr (104) strömende Prozessgas zur Durchführung der Gasphasenreaktion erwärmt wird. Ein entsprechender Reaktor (100, 200) wird ebenfalls vorgeschlagen.

## Beschreibung

Die Erfindung betrifft ein Verfahren und eine Anlage zur Durchführung einer Gasphasenreaktion, insbesondere zur Herstellung von Wasserstoff durch Dampfreformierung.

### Hintergrund

Die Erzeugung von Wasserstoff erfolgt derzeit noch überwiegend auf Basis von Kohlenwasserstoffen, beispielsweise durch Dampfreformierung von Erdgas oder anderen kohlenwasserstoffhaltigen Einsatzstoffen (Steam Methan Reforming, SMR). Da derartige Verfahren einen beträchtlichen Kohlendioxid-Fußabdruck aufweisen, wird der bereitgestellte Wasserstoff auch als "grauer" Wasserstoff bezeichnet.

Im Zuge der Klimadiskussion und entsprechender regulatorischer Maßnahmen bekommt die Vermeidung und Rückgewinnung von Kohlendioxid zunehmend an Bedeutung. Eine langfristig angestrebte Lösung kann beispielsweise die Gewinnung von Wasserstoff mittels Elektrolyse umfassen, die bei Einsatz von erneuerbaren Energiequellen kohlendioxidneutral sein kann, so dass entsprechend hergestellter Wasserstoff auch als "grün" bezeichnet wird.

Zumindest bis zur wirtschaftlich erfolgreichen Realisierung von Verfahren zur Herstellung von "grünem" Wasserstoff können Brückentechnologien eingesetzt werden. Diese umfassen insbesondere die Rückgewinnung und Lagerung oder Verwendung von Kohlendioxid (engl. Carbon (Dioxide) Capture and Storage, CCS bzw. Carbon (Dioxide) Capture and Utilization, CCU). In diesem Fall wird entsprechender Wasserstoff auch als "blau" bezeichnet.

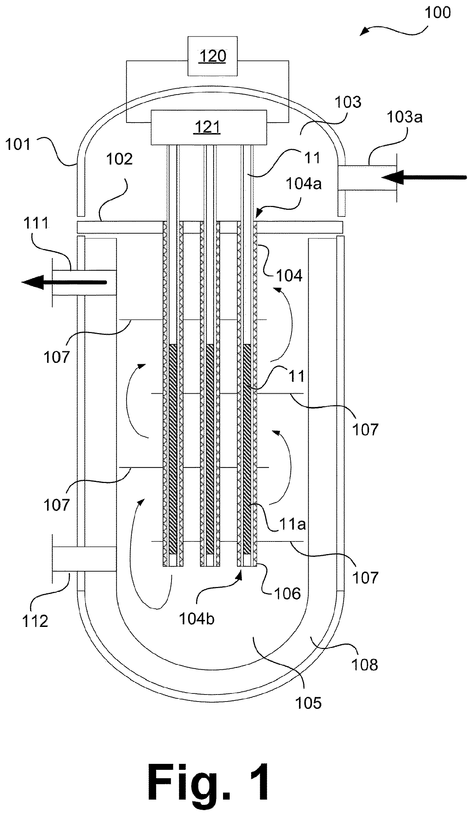

Entsprechende Ausgestaltungen von Dampfreformierungsverfahren sind in der europäischen Patentanmeldung 22020126.3 der Anmelderin beschrieben. Es wird dabei insbesondere auf die dortigen Figuren 1 bis 3 und die zugehörige Figurenbeschreibung in dieser Anmeldung Bezug genommen.

In den genannten Verfahren wird weiterhin eine beträchtliche Menge von Kohlendioxid in einer Wassergasshift und durch die Verbrennung fossiler Brennstoffe gebildet, und die Abtrennung sowie Lagerung bzw. Verwertung von Kohlendioxid ist nicht immer gewünscht bzw. erweist sich in bestimmten Fällen als aufwendig.

Die Entfernung von Kohlendioxid aus dem Prozessgas stellt dabei eine sehr konkurrenzfähige Lösung dar, erfordert jedoch immer noch eine (weitgehende) Dekarbonisierung des Brennstoffs, um Kohlendioxidemissionen im Rauchgas zu verringern oder zu vermeiden. Es ist zwar möglich, kohlenwasserstofffreie Brenngase wie Wasserstoff oder Ammoniak zu verwenden, allerdings ist die Bereitstellung solcher Brenngase typischerweise vergleichsweise kostenintensiv und aufwendig.

Daher besteht eine weitere, momentan in intensiver Entwicklung befindliche Alternative die Beheizung der Reformierreaktoren mit elektrischem Strom, und vorzugsweise mit regenerativ erzeugtem Strom. Da hierbei auch weniger oder kein aufwendig in der Dampfreformierung erzeugter Wasserstoff verfeuert wird, können sich entsprechende Verfahren als deutlich effizienter erweisen, was die Ausbeute per eingesetztem Kohlenwasserstoff, beispielsweise Erdgas, angeht.

In der Patent- und Nichtpatentliteratur existiert eine Reihe von Ansätzen zur Beheizung entsprechender Reformierreaktoren. Neben einer direkten resistiven Beheizung des Katalysators selbst oder eines Trägers, auf den dieser beispielsweise durch eine Waschbeschichtung aufgetragen ist, können dabei auch resistive Heizelemente eingesetzt werden. Auch kann eine Überhitzung des Prozessgases vorgenommen werden, das dann mit erhöhter Temperatur durch das Katalysatorbett strömt.

Neben einer direkten Beheizung, bei der das Heizmittel, beispielsweise ein Heizelement, eine Heizmanschette oder ein resistiv beheizter Katalysatorträger in stofflichem Kontakt mit dem Prozessgas oder im Materialkontakt zu Reaktionsrohren, durch die das Prozessgas strömt, steht, kann auch eine indirekte elektrische Beheizung eingesetzt werden, wie unter anderem in der WO 2020/002326 A1 erläutert, aber bereits auch aus früheren Druckschriften bekannt.

Eine derartige indirekte elektrische Beheizung kann unter Verwendung von elektrischen Strahlungsheizelementen erfolgen, die zum Erhitzen auf die für die genannten Reaktionen erforderlichen hohen Temperaturen geeignet sind, wobei derartige Heizelemente derart angeordnet sind, dass diese nicht in direktem Kontakt mit den Reaktionsrohen stehen. Die Wärmeübertragung erfolgt dabei überwiegend oder ausschließlich in Form von Strahlungswärme.

Als weitere Alternative ist auch eine induktive Beheizung des Katalysators bzw. der Reaktionsrohre möglich, wie beispielsweise in der WO 2017/186437 A1 offenbart.

Die Verwendung von elektrischer Wärme ist für die Reformierung insgesamt von großem Vorteil, da auf diese Weise Rauchgas vermieden wird. Allerdings ist die direkte Widerstandsheizung der Reaktionsrohre in bestimmten Fällen mit Problemen verbunden, insbesondere was die Anordnung der hierzu erforderlichen Heizelemente und die Wärmeintegration des den Reformierreaktor verlassenden Prozessgases angeht. Daher besteht hier ein Bedarf nach Verbesserungen.

Generell sind Ausgestaltungen der vorliegenden Erfindung nicht auf die Herstellung von Wasserstoff durch Dampfreformierung beschränkt, sondern auch in anderen, bei entsprechenden oder vergleichbar hohen Temperaturen durchgeführte Gasphasenreaktionen einsetzbar, wie weiter unten erläutert.

### Offenbarung der Erfindung

Vor diesem Hintergrund schlägt die vorliegende Erfindung ein Verfahren und eine Anlage zur Durchführung einer Gasphasenreaktion, insbesondere zur Herstellung von Wasserstoff mit den Merkmalen der unabhängigen Patentansprüche vor. Ausgestaltungen sind Gegenstand der abhängigen Patentansprüche sowie der nachfolgenden Beschreibung.

Ausgestaltungen der vorliegenden Erfindung betreffen einen in gewissem Umfang, oder im Wesentlichen, vergleichbar mit einem Rohrbündelwärmetauscher (engl. Shell-and-Tube Heat Exchanger) bzw. Rohrbündelreaktor (engl. Shell-and-Tube Reactor) ausgebildeten Reaktor zur Durchführung einer Gasphasenreaktion bei hoher Temperatur, insbesondere einer Dampfreformierung.

Rohrbündelwärmetauscher werden häufig als Wärmetauscher in Raffinerien und anderen verfahrenstechnischen Prozessen eingesetzt. Sie eignen sich insbesondere für Anwendungen mit höherem Druck. Rohrbündelreaktoren können für exotherme Reaktionen (z.B. für eine oxidative Dehydrierung von Alkanen) in der Gasphase verwendet werden. Das umzusetzende Gasgemisch wird dabei mithilfe eines Katalysators in mehreren fluidisch parallel geschalteten und typischerweise geraden und insbesondere aufrecht angeordneten Rohren (engl. Tubes) umgesetzt, die in einem Außenbehälter (engl. Shell) von einem oder mehreren Kühlmedien, insbesondere einer Salzschmelze, umflossen werden.

Ein "Rohrboden" ist hierbei eine Struktur, die einen Einspeisebereich für das durch den Rohrbündelwärmetauscher oder Rohrbündelreaktor geführte Gas von einem Bereich, in dem das Kühlmedium vorliegt, abgrenzt, und ausgehend von dem sich die Rohre, durch die das Gas geführt werden, erstrecken. In konventionellen Rohrbündelwärmetauschern erstrecken sich die Rohre dabei zwischen zwei Rohrböden und durch einen Bereich, der von dem Kühlmedium durchflossen wird.

In Abweichung zu bekannten Rohrbündelwärmetauschern bzw. Rohrbündelreaktoren wird in Ausgestaltungen der vorliegenden Erfindung kein (separates) Kühlmedium eingesetzt, vielmehr wird eine Wärmeintegration mit dem durch die Reaktionsrohre strömenden und dem aus den Reaktionsrohren ausströmenden Prozessgas vorgenommen, wobei unterschiedliche Ausgestaltungen vorgesehen sein können. In Ausgestaltungen der Erfindung ist nur ein Rohrboden vorgesehen und die Rohre enden frei in einem Entnahmebereich.

Der Begriff "Entnahmebereich" soll hier einen fluidisch mit dem Austritt der Reaktionsrohre verbundenen Bereich innerhalb des Reaktors bezeichnen. Dieser kann auch den größten Teil des Innenraums des Reaktorbehälters darstellen und in sich strukturiert, gekammert oder dergleichen sein. Der Begriff ist also nicht beschränkt auf den unmittelbaren Bereich der Entnahme aus dem Reaktorbehälter über eine Entnahmeleitung zu verstehen. Ein Entnahmebereich kann daher einen Austrittsbereich aus den Reaktionsrohren und einen oder mehrere Ausleitungsbereiche aus dem Reaktorbehälter (über Entnahmeleitungen) umfassen.

Im Rahmen der vorliegenden Erfindung wird ein Verfahren zur Durchführung einer Gasphasenreaktion vorgeschlagen, bei dem ein Reaktanden enthaltendes Prozessgas durch einen Reaktor geführt wird, wobei der Reaktor einen Reaktorbehälter mit einem Rohrboden aufweist, der einen Einspeisebereich für das Prozessgas abgrenzt, und ausgehend von welchem sich eine Vielzahl von Reaktionsrohren erstreckt, die auf einer ersten Seite zu dem Einspeisebereich für das Prozessgas geöffnet sind und auf einer zweiten Seite zu einem Entnahmebereich für das Prozessgas geöffnet sind, so dass das Prozessgas durch die Reaktionsrohre strömt, wobei koaxial innerhalb zumindest eines Teils der Reaktionsrohre jeweils ein stabförmiges elektrisches Heizelement angeordnet ist, mittels welchem das durch das jeweilige Reaktionsrohr strömende Prozessgas zur Durchführung der Gasphasenreaktion erwärmt wird. Mit anderen Worten ist in der Mitte einiger Reaktionsrohre, insbesondere jedes Reaktionsrohrs, ein entsprechendes Heizelement angeordnet.

Insgesamt schafft die vorliegende Erfindung dabei ein kostengünstiges und zuverlässiges Design mit aktueller Technologie, insbesondere betreffend die Heizelemente und den Katalysator. Durch die Erfindung lässt sich eine kompakte Bauweise erzielen, da kein zusätzlicher Platz für Brenner benötigt wird. Eine exakte Regelung der Heiztemperatur ist möglich. Ferner ermöglicht die vorliegende Erfindung eine elektrische Beheizung und Wärmeintegration von heißem Prozessgas in einem Apparat. Im Rahmen der vorliegenden Erfindung fällt insbesondere kein Rauchgas an, so dass sich auch keine Kohlendioxidemissionen über das Rauchgas ergeben.

In Ausgestaltungen der vorliegenden Erfindung können auch bestimmte Zonen der Reaktionsrohre unbeheizt bleiben, so dass eine bessere Wärmeeinbindung erzielt werden kann. Durch sekundäre Austrittsleitungen kann in Ausgestaltungen der vorliegenden Erfindung eine besonders vorteilhafte Steuerung der Wärmeintegration erfolgen. Hierbei können auch externe Wärmequellen integriert werden, beispielsweise eine Feuerung, die mit einem Offgas einer nachgeschalteten Druckwechseladsorption betrieben werden kann, wie sie in der eingangs erwähnten europäischen Patentanmeldung 22020126.3 für den Fall der Dampfreformierung beschrieben ist.

In Ausgestaltungen der Erfindung kann koaxial zwischen dem Reaktionsrohr und dem jeweiligen Heizelement eine Schutzstruktur angeordnet sein. Falls erforderlich, kann beispielsweise ein Schutzrohr um das jeweilige Heizelement gelegt werden, um einen direkten Kontakt und mögliche Kurzschlüsse mit dem Katalysatormaterial zu vermeiden. Hierbei können unterschiedliche Arten der Realisierung gewählt werden, beispielsweise keramische Rohre, Beschichtungen, metallische oder nichtmetallische Abstandshalter, Katalysator- oder inerte Keramikringe.

Jeweils zumindest ein Abschnitt der Reaktionsrohre kann in Ausgestaltungen der Erfindung ein Katalysatormaterial aufweisen, das in einer Beschichtung der Reaktionsrohre, einer strukturierten Anordnung und einem pelletierten Material oder Kombinationen hiervon bereitgestellt ist. Insbesondere können in Ausgestaltungen der vorliegenden Erfindung in dem Druckbehälter mehrere unterschiedliche Katalysatormaterialien oder Katalysatoren bereitgestellt und in einer Strömungsrichtung des Prozessgases hintereinander angeordnet sein. Auf diese Weise können beispielsweise unterschiedliche (Abfolgen von) Reaktionen katalysiert werden. Im Falle der Dampfreformierung können auch beispielsweise Vorreformierbetten oder Zwischenbetten gebildet werden, die jeweils zur Verhinderung oder Verringerung einer Verkokung dienen können. Unterschiedliche Katalysatormaterialien können dabei jeweils auch mit (in sich oder gegenüber anderen Katalysatormaterialien) unterschiedlichen Katalysatoren, Katalysatorbeladungen oder Katalysatoraktivitäten ausgebildet sein und unterschiedliche Volumina aufweisen.

Mit anderen Worten ist also in Ausgestaltungen der Erfindung jeweils um ein Heizelement herum ein Katalysator (strukturiert, pelletiert, oder in Form einer Beschichtung der Rohre) angeordnet, wo Reaktanden des Prozessgases entsprechend umgewandelt werden.

Das Katalysatormaterial kann dabei insbesondere in (seriell entlang zumindest eines Abschnitts der Länge der Reaktionsrohre hintereinander angeordneten) Kammern bereitgestellt sein, die fluidisch miteinander verbunden sind, wobei Mittel bereitgestellt sind, die eine zentrifugale Durchströmung des Katalysatormaterials bzw. eine Querströmung durch dieses bewirken. Auch eine zentripetale Durchströmung kann bewirkt werden. Damit können also Umlenkmittel bereitgestellt sein, die eine Durchströmung des Katalysatormaterials in einer Strömungsrichtung bewirken, die gegenüber Längsachsen der Reaktionsrohre um mehr als 45° und bis zu 145°, insbesondere 90 ± 10°, geneigt sind.

Durch die Bereitstellung entsprechender Maßnahmen lässt sich insbesondere die Verkokungsneigung in den Reaktionsrohren verringern, die sich aus der sehr hohen Oberflächentemperatur des Heizelements ergeben kann. Da die Wärmezufuhr nicht lokal gesteuert werden kann, wird sie vorteilhafterweise derart begrenzt, dass entlang des Heizelements keine Verkokung möglich ist. Bei einer Zentrifugalströmung bzw. Querströmung kann sich das am Heizelement erwärmte Prozessgas in zentrifugaler Richtung zunächst in dem Katalysatormaterial in gewissem Umfang abkühlen, bevor es an der Rohrwand und am Heizelement wieder erwärmt wird. Insbesondere wird vermieden, dass Anteile des Prozessgases deutlich länger als andere entlang des Heizelements strömen.

Eine derartige zentrifugale Durchströmung des Katalysatormaterials kann insbesondere durch die Bereitstellung koaxial angeordneter, perforierter Wände erzielt werden, die jeweils in axialen Segmenten bereitgestellt sind, wobei in einem Ringraum zwischen diesen das Katalysatormaterial angeordnet sein kann und das radial zur Außenseite der äußeren perforierten Wand des einen Segments ausströmende Prozessgas an die Innenseite der inneren perforierten Wand des stromab angeordneten nächsten Segments geführt werden kann. Auch eine Führung in entgegengesetzter Richtung ist mittels entsprechender Umlenkmittel möglich.

In Ausgestaltungen der Erfindung erstrecken sich die Reaktionsrohre im Wesentlichen vertikal, d.h. im Betrieb in einer um weniger als 10° von der Lotrechten abweichenden Richtung, und diese sind am oberen Ende in den Rohrboden eingebunden und öffnen sich am unteren Ende frei in den Entnahmebereich. Das heiße Prozessgas kann dabei aus den unteren Enden ausströmen und kann anschließend durch den die Reaktionsrohre umgebenden Entnahmebereich nach oben geführt werden. Es kann dabei insbesondere über Umlenkbleche zwischen den Rohren hindurch- und um diese herumgeführt werden und zu einer Auslassleitung geleitet werden. Während es damit außerhalb der Reaktionsrohre durch das gebildete Rohrbündel strömt, heizt das heiße Prozessgas die Reaktionsrohre von außen auf und sorgt so in Ausgestaltungen der Erfindung für die Wärmeintegration.

In entsprechenden Ausgestaltungen der Erfindung kann also der Entnahmebereich zumindest einen Abschnitt der Reaktionsrohre umgeben und/oder der Rohrboden kann den Einspeisebereich und den Entnahmebereich voneinander trennen und die Reaktionsrohre können in den Entnahmebereich ragen und/oder der Entnahmebereich kann Gasumlenkmittel aufweisen, die dafür eingerichtet sind, eine Verweildauer des aus den Reaktionsrohren ausströmenden Prozessgases, und damit eine Kontaktdauer mit einer Rohraußenfläche, zu verlängern.

In weiteren Ausgestaltungen der vorliegenden Erfindung kann vorgesehen sein, dass sich die Heizelemente jeweils entlang eines Abschnitts der Reaktionsrohre innerhalb derselben erstrecken und wenigstens in einem Teil des Abschnitts der Reaktionsrohre elektrisch beheizbar sind. Eine Beheizung kann dabei auch nur in einer Teilstrecke der jeweiligen Heizelemente, und damit Reaktionsrohre, vorgesehen sein. Vorteile entsprechender Maßnahmen wurden bereits erläutert.

Bei einer entsprechenden Ausgestaltung können die Heizelemente auch zumindest zum Teil auf unterschiedliche Temperaturen beheizt werden. Auf diese Weise kann eine graduelle Abstufung der Beheizung geschaffen werden. Insbesondere ist es auf diese Weise auch möglich, bestimmte Bereiche mit weniger temperaturfesten, und damit kostengünstigeren und einfacher zu verarbeitenden Materialien auszubilden oder vor zu hohen Temperaturen zu schützen.

In Ausgestaltungen der vorliegenden Erfindung können die Heizelemente ein hochtemperaturfestes Material, insbesondere eine (gesinterte) oxiddispersionsverfestigte Superlegierung, aufweisen, wie sie an sich aus dem Bereich der Hochtemperaturtechnik bekannt ist. Zu oxiddispersionsverfestigten Superlegierungen, die im Rahmen der vorliegenden Erfindung zum Einsatz kommen, sowie deren mögliche Komponenten und Ausgestaltungen, Basiswerkstoffe, zur Verfestigung einsetzbare Oxidpartikel und deren Grundelemente usw. sei auf einschlägige Fachliteratur verwiesen.

In Ausgestaltungen der Erfindung kann beispielsweise ein pulvermetallurgisch hergestellte, dispersionsverfestigte, ferritische Eisen-Chrom-Aluminium-Legierung, die sich für den Einsatz bei Temperaturen bis zu 1.425 °C eignet, eingesetzt werden. Eine derartige Legierung zeichnet sich durch außergewöhnlich gute Formstabilität und Oxidationsbeständigkeit aus.

Für die Bestromung unterschiedlicher Heizelemente oder Gruppen von Heizelementen können in Ausgestaltungen der vorliegenden Erfindung unterschiedliche Stromquellen, Stromwandler, Netze, Generatoren oder dergleichen eingesetzt werden. Es können aber auch alle Heizelemente gemeinsam bestromt werden.

In bestimmten Ausgestaltungen des erfindungsgemäßen Verfahrens können von dem Entnahmebereich auch mehrere Entnahmeleitungen aus dem Reaktorbehälter herausgeführt sein, die unterschiedliche Kontaktstrecken des aus den Reaktionsrohren ausströmenden Prozessgases definieren. Auf diese Weise ist eine gesteuerte Wärmeintegration möglich. Insbesondere können jeweils Anteile des über die Entnahmeleitungen aus dem Entnahmebereich ausströmenden bzw. entnommenen Prozessgases in beliebiger Weise eingestellt werden.

Eine der Entnahmeleitungen kann in Ausgestaltungen der vorliegenden Erfindung auch mit einem externen Wärmeintegrationsmittel gekoppelt sein und hierüber beheizt oder abgekühlt werden. Letzteres ist insbesondere dann vorteilhaft, wenn die reine Wärmeintegration mit den Reaktionsrohren nicht ausreicht.

In einer Ausgestaltung der vorliegenden Erfindung kann der Entnahmebereich innerhalb des Reaktorbehälters von einer hochtemperaturfesten Auskleidung umgeben sein. Auf diese Weise kann die Reaktorwand aus weniger temperaturfestem Material gebildet werden, was zu Kosteneinsparungen bei gleicher Festigkeit führt.

Die Heizelemente werden in Ausgestaltungen der vorliegenden Erfindung (nur) in dem Einspeisebereich elektrisch kontaktiert. Die elektrische Stromversorgung befindet sich damit in einem Bereich des Reaktors, in dem geringere Temperaturen herrschen, was eine einfachere mechanische Realisierung durch die Verwendung weniger temperaturfester Materialien ermöglicht.

Wie erwähnt, eignet sich die vorliegende Erfindung insbesondere zur Durchführung einer Dampfreformierung mit oder ohne Kohlendioxideinsatz, die Gasphasenreaktion kann jedoch auch aus einer Ammoniakspaltung, einer Propandehydrierung, einer Butandehydrierung, einer Butendehydrierung, einer Ethylbenzoldehydrierung und einer reversen Wassergasshiftreaktion ausgewählt sein, insbesondere solchen Gasphasenreaktionen, bei denen vergleichbare Temperaturen wie bei einer Dampfreformierung herrschen.

Das Prozessgas kann im Rahmen der vorliegenden Erfindung auf einer Einspeisetemperatur in einem Bereich von 350 oder 500 bis 700 °C, beispielsweise ca. 550 °C, in den Reaktor eingespeist werden, und die elektrische Beheizung kann derart vorgenommen werden, dass das Prozessgas auf einer Entnahmetemperatur in einem Bereich von 800 bis 1.000 oder 1.050 °C, beispielsweise ca. 850 °C, aus dem Reaktor ausströmt. Die vorliegende Erfindung ermöglicht auch bei derartigen Temperaturen eine verbesserte elektrische Beheizung.

Der in einem entsprechenden Verfahren eingesetzte Reaktor kann in Ausgestaltungen der vorliegenden Erfindung auch einer von mehreren, gleichartig aufgebauten und seriell angeordneten Reaktoren sein. Auch eine Hintereinander- bzw. Parallelschaltung von elektrisch beheizten Reaktoren, wie sie die vorliegende Erfindung in ihren Ausgestaltungen vorschlägt, und konventionellen Reaktoren ist möglich.

Vorgeschlagen wird auch ein Reaktor, der zur Umsetzung eines durch den Reaktor geführten Prozessgases durch eine Gasphasenreaktion eingerichtet ist, wobei der Reaktor einen Reaktorbehälter mit einem Rohrboden aufweist, der einen Einspeisebereich für das Prozessgas abgrenzt, und ausgehend von welchem sich eine Vielzahl von Reaktionsrohren erstreckt, die auf einer ersten Seite zu dem Einspeisebereich für das Prozessgas geöffnet sind und auf einer zweiten Seite zu einem Entnahmebereich für das Prozessgas geöffnet sind, so dass ein Durchströmen der Reaktionsrohre durch das Prozessgas bewirkbar ist, wobei koaxial innerhalb zumindest eines Teils der Reaktionsrohre jeweils ein stabförmiges elektrisches Heizelement angeordnet ist, mittels welchem das durch das jeweilige Reaktionsrohr strömende Prozessgas zur Durchführung der Gasphasenreaktion erwärmt wird.

Zu weiteren Merkmalen und Vorteilen eines entsprechenden Reaktors und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für einen Reaktor, der gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 einen Reaktor veranschaulicht,
Figur 2 einen Reaktor in Teilansicht veranschaulicht, und
Figur 3 einen Ausschnitt eines Reaktionsrohrs veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

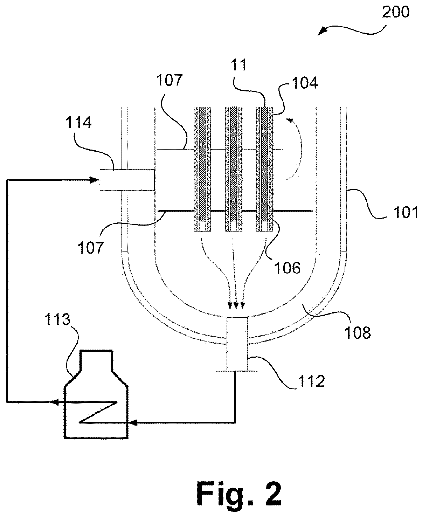

In den Figuren 1 und 2 sind Reaktoren gemäß Ausgestaltungen der Erfindung veranschaulicht und mit 100 bzw. 200 bezeichnet. In Figur 2 ist nur eine Teilansicht des Reaktors 200 veranschaulicht.

Wie insoweit für entsprechende Druckbehälter üblich, kann dabei jeweils ein zylindrischer Abschnitt vorgesehen sein, an dessen beiden Enden sich kalottenförmige oder halbkugelige Endkappen anschließen. Diese Abschnitte sind in den Figuren 1 und 2 jeweils nicht gesondert bezeichnet.

Bei der Verwendung der Reaktoren 100, 200 zur Durchführung wird den Reaktoren, wie in Figur 1 mit einem rechts dargestellten fetten Pfeil veranschaulicht, ein Reaktanden enthaltendes Prozessgas zugeführt.

Die Reaktoren 100, 200 weisen jeweils einen Reaktorbehälter 101 auf, innerhalb dessen ein Rohrboden 102 angeordnet ist. Der Rohrboden 102 grenzt einen Einspeisebereich 103 für das Prozessgas von einem Rest des Reaktorbehälters 101 ab. Der Einspeisebereich 103 stellt eine Verteilerhaube dar, in die eine Einspeiseleitung 103a für das Prozessgas mündet.

Ausgehend von dem Rohrboden 102 erstrecken sich eine Vielzahl von Reaktionsrohren, die grundsätzlich identisch aufgebaut sind, und daher nur in einem Fall mit 104 bezeichnet sind. Die Reaktionsrohre 104 sind auf einer ersten Seite, an einer Stelle mit 104a bezeichnet, zu dem Einspeisebereich 103 für das Prozessgas geöffnet. Sie öffnen sich ferner auf einer zweiten Seite, an einer Stelle mit 104b bezeichnet, zu einem Entnahmebereich 105 für das Prozessgas und ragen in diesen Entnahmebereich 105 hinein. Hierdurch kann das Prozessgas durch die Reaktionsrohre 104 strömen und in den Entnahmebereich 105 austreten.

Koaxial innerhalb zumindest eines Teils der Reaktionsrohre 104, hier innerhalb aller veranschaulichten Reaktionsrohre 104, ist jeweils ein stabförmiges elektrisches Heizelement 11 angeordnet, mittels welchem das durch das jeweilige Reaktionsrohr 104 strömende Prozessgas zur Durchführung der Gasphasenreaktion erwärmt wird. Auch hier ist nur ein Heizelement 11 mit einem Bezugszeichen versehen. Die Heizelemente 11 sind mit einer ungefüllten Doppelwand veranschaulicht. Ein Heizbereich 11a der Heizelemente, ebenfalls nur in einem Fall bezeichnet, ist in Form einer Schrägschraffur veranschaulicht und muss sich nicht über die gesamte Länge der Heizelemente 11 bzw. der Reaktionsrohre 104 erstrecken. Eine koaxial zwischen den jeweiligen Reaktionsrohren 104 und den jeweiligen Heizelementen 11 angeordnete Schutzstruktur ist nicht gesondert veranschaulicht.

Wie bereits zuvor erläutert, weist zumindest ein Abschnitt der Reaktionsrohre 104 ein Katalysatormaterial 106 auf, das in einer Beschichtung der Reaktionsrohre 104, einer strukturierten Anordnung und einem pelletierten Material oder Kombinationen hiervon bereitgestellt und in Form einer Kreuzschraffur veranschaulicht ist.

Der Entnahmebereich 105 umgibt die in ihn jeweils hineinragenden Abschnitte der Reaktionsrohre 104, wie insbesondere in Figur 1 anhand des Reaktors 100 dargestellt. Der Rohrboden 102 trennt den Einspeisebereich 103 und den Entnahmebereich 105 voneinander. Der Entnahmebereich 105 weist Gasumlenkmittel 107 in Form von Blechen oder dergleichen auf, die dafür eingerichtet sind, eine Verweildauer des aus den Reaktionsrohren 104 ausströmenden Prozessgases zu verlängern, indem sie dieses, wie mit gebogenen Pfeilen veranschaulicht, umlenken, bevor das Prozessgas anschließend (zumindest zum Teil) über eine Entnahmeleitung 111 aus dem Reaktorbehälter 101 herausgeführt wird.

Wie in Figur 1 anhand des Reaktors 100 veranschaulicht, kann eine weitere Entnahmeleitung 112 bereitgestellt sein, mittels welcher das aus den Reaktionsrohren ausströmende Prozessgas direkt aus dem Reaktorbehälter 101 ausgeleitet werden kann. Auf diese Weise kann die Wärmeintegration angepasst werden, indem mehr oder weniger des aus den Reaktionsrohren 104 austretenden Prozessgases an diesen entlanggeführt bzw. direkt aus dem Reaktorbehälter 101 ausgeleitet wird.

Wie in Figur 2 anhand des Reaktors 200 in Ausschnittsdarstellung veranschaulicht, kann die weitere Entnahmeleitung 112 auch nach unten verlagert werden. Die Entnahmeleitung 112 kann dabei mit einem externen Wärmeintegrationsmittel 113 gekoppelt sein, insbesondere einem Wärmetauscher oder Kühler. Das dort insbesondere entsprechend erwärmte Prozessgas kann sodann über eine weitere Einspeiseleitung 114 in den Reaktorbehälter 101 zurückgespeist werden. Ein entsprechendes Wärmeintegrationsmittel 113 kann beispielsweise ein Heizer sein, der mit einem Offgas einer Druckwechseladsorption befeuert wird.

In allen Fällen kann der Entnahmebereich 105 innerhalb des Reaktorbehälters 101 von einer hochtemperaturfesten Auskleidung 108 umgeben sein, so dass, wie erwähnt, die Reaktorwand weniger temperaturfest ausgebildet werden muss.

Wie in Figur 1 dargestellt, werden die Heizelemente in dem Einspeisebereich 103 mit einer Stromquelle 120 elektrisch kontaktiert, wobei ein bei den hier geringeren Temperaturen beständiger Stromverteiler 121 bereitgestellt ist.

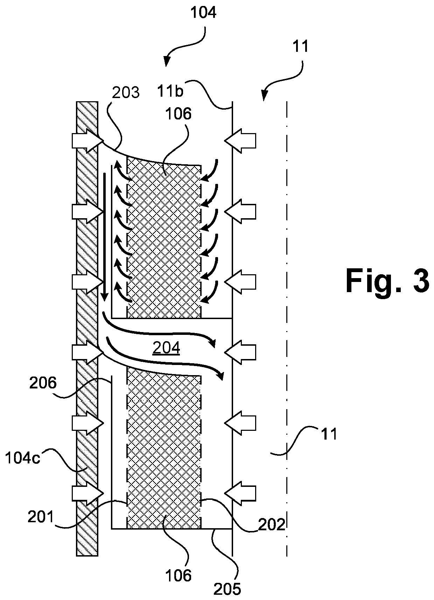

Figur 3 veranschaulicht eine Teilansicht eines Reaktionsrohrs 104 linksseitig einer strichpunktiert dargestellten Mittelachse. Die Wand des Reaktionsrohrs ist schrägschraffiert dargestellt und mit 104c bezeichnet. In der Nähe der Mittelachse befindet sich das nur grob angedeutete Heizelement 11, von dem insbesondere eine Wand 11b (bzw. die Wand einer Schutzschicht) dargestellt ist. Ein Wärmeübertritt aus dem Heizelement 11 und über die Wand 104c des Reaktionsrohrs 104 in den Innenraum des Reaktionsrohrs 104 ist mit weißen (nicht ausgefüllten) Pfeilen veranschaulicht.

Wie veranschaulicht, ist das Katalysatormaterial 106 (mit Kreuzschraffur dargestellt) dabei in Kammern angeordnet, die koaxial angeordnete, perforierte Wände 201, 202 aufweisen. Diese sind aus Gründen der Klarheit der Darstellung nur in einem unteren Bereich der Figur 3 mit Bezugszeichen versehen, da in einem oberen Bereich ein Fluss des Prozessgases mit fetten Pfeilen veranschaulicht ist. Das Katalysatormaterial 106 ist axial segmentiert mit axialen Zwischenräumen 204 bereitgestellt.

Das Katalysatormaterial 106 ist in einem Ringraum zwischen den koaxial angeordneten, perforierten Wänden 201, 202 bereitgestellt, und es sind Führungsmittel in Form weiterer Bleche 203, 205, 206 bereitgestellt, die dafür eingerichtet sind, das zur Außenseite der äußeren perforierten Wand 201 eines ersten Segments ausströmende Prozessgas an die Innenseite der inneren perforierten Wand 202 des stromab angeordneten nächsten Segments zu führen und zuvor an der Rohrwand 104c des ersten Segments entlangzuführen.

## Patentansprüche

1. Verfahren zur Durchführung einer Gasphasenreaktion, bei dem ein Reaktanden enthaltendes Prozessgas durch einen Reaktor (100, 200) geführt wird, wobei der Reaktor (100, 200) einen Reaktorbehälter (101) mit einem Rohrboden (102) aufweist, der einen Einspeisebereich (103) für das Prozessgas abgrenzt, und ausgehend von welchem sich eine Vielzahl von Reaktionsrohren (104) erstreckt, die auf einer ersten Seite zu dem Einspeisebereich (103) für das Prozessgas geöffnet sind und auf einer zweiten Seite zu einem Entnahmebereich (105) für das Prozessgas geöffnet sind, so dass das Prozessgas durch die Reaktionsrohre (104) strömt, wobei koaxial innerhalb zumindest eines Teils der Reaktionsrohre (104) jeweils ein stabförmiges elektrisches Heizelement (11) angeordnet ist, mittels welchem das durch das jeweilige Reaktionsrohr (104) strömende Prozessgas zur Durchführung der Gasphasenreaktion erwärmt wird.

2. Verfahren nach Anspruch 1 bei dem koaxial zwischen dem Reaktionsrohr (104) und dem jeweiligen Heizelement (11) eine Schutzstruktur angeordnet ist.

3. Verfahren nach Anspruch 1 oder 2, bei dem jeweils zumindest ein Abschnitt der Reaktionsrohre (104) ein Katalysatormaterial (106) aufweist, das in einer Beschichtung der Reaktionsrohre (104), einer strukturierten Anordnung oder einem pelletierten Material oder Kombinationen hiervon bereitgestellt ist.

4. Verfahren nach Anspruch 3, bei dem das Katalysatormaterial (106) in Kammern angeordnet ist, Umlenkmittel (201-205) bereitgestellt sind, die eine Durchströmung des Katalysatormaterials (106) in einer Strömungsrichtung bewirken, die gegenüber Längsachsen der Reaktionsrohre um mehr als 45° und bis zu 145° geneigt sind.

5. Verfahren nach Anspruch 4, bei dem die Umlenkmittel (201-205) koaxial angeordnete, perforierte Wände (201, 202) aufweisen.

6. Verfahren nach einem der vorstehenden Ansprüche, bei dem sich die Heizelemente (11) jeweils entlang eines Abschnitts der Reaktionsrohre (104) innerhalb derselben erstrecken und wenigstens in einem Teil des Abschnitts der Reaktionsrohre (104) elektrisch beheizbar sind.

7. Verfahren nach einem der vorstehenden Ansprüche, bei dem der Entnahmebereich (105) zumindest einen Abschnitt der Reaktionsrohre (104) umgibt und/oder wobei der Rohrboden (102) den Einspeisebereich (103) und den Entnahmebereich (105) voneinander trennt und die Reaktionsrohre (104) in den Entnahmebereich (105) ragen und/oder wobei der Entnahmebereich (105) Gasumlenkmittel (107) aufweist, die dafür eingerichtet sind, eine Verweildauer des aus den Reaktionsrohren (104) ausströmenden Prozessgases zu verlängern.

8. Verfahren nach einem der vorstehenden Ansprüche, bei dem von dem Entnahmebereich (105) mehrere Entnahmeleitungen (111, 112) aus dem Reaktorbehälter (101) herausgeführt sind.

9. Verfahren nach Anspruch 6, bei dem eine der Entnahmeleitungen (112) mit einem externen Wärmeintegrationsmittel (113) gekoppelt ist.

10. Verfahren nach einem der vorstehenden Ansprüche, bei dem der Entnahmebereich (105) innerhalb des Reaktorbehälters (101) von einer hochtemperaturfesten Auskleidung (108) umgeben ist.

11. Verfahren nach einem der vorstehenden Ansprüche, bei dem die Heizelemente in dem Einspeisebereich (103) elektrisch kontaktiert werden.

12. Verfahren nach einem der vorstehenden Ansprüche, bei dem die Gasphasenreaktion aus einer Dampfreformierung mit oder ohne Kohlendioxideinsatz, einer Ammoniakspaltung, einer Propandehydrierung, einer Butandehydrierung, einer Butendehydrierung, einer Ethylbenzoldehydrierung und einer reversen Wassergasshiftreaktion ausgewählt ist.

13. Reaktor (100, 200), der zur Umsetzung eines durch den Reaktor (100, 200) geführten Prozessgases durch eine Gasphasenreaktion eingerichtet ist, wobei der Reaktor (100, 200) einen Reaktorbehälter (101) mit einem Rohrboden (102) aufweist, der einen Einspeisebereich (103) für das Prozessgas abgrenzt, und ausgehend von welchem sich eine Vielzahl von Reaktionsrohren (104) erstreckt, die auf einer ersten Seite zu dem Einspeisebereich (103) für das Prozessgas geöffnet sind und auf einer zweiten Seite zu einem Entnahmebereich (105) für das Prozessgas geöffnet sind, so dass ein Durchströmen der Reaktionsrohre (104) durch das Prozessgas bewirkbar ist, wobei koaxial innerhalb zumindest eines Teils der Reaktionsrohre (104) jeweils ein stabförmiges elektrisches Heizelement (11) angeordnet ist, mittels welchem das durch das jeweilige Reaktionsrohr (104) strömende Prozessgas zur Durchführung der Gasphasenreaktion erwärmt wird.

14. Reaktor (100, 200) nach Anspruch 13, der zur Durchführung eines Verfahrens nach einem der Ansprüche 1 bis 12 eingerichtet ist.
